# EUROPÄISCHE PATENTANMELDUNG

(11) **EP 3 499 707 A1**
(43) Veröffentlichungstag der Anmeldung: **19.06.2019**
(21) Anmeldenummer: 18196155.8
(22) Anmeldetag: 24.09.2018
(51) Int. Cl.: H02P 21/00, H02P 29/024

(54) **VERFAHREN ZUM BETRIEB EINER ELEKTRISCHEN MASCHINE UND DANACH ARBEITENDE ELEKTRISCHE MASCHINE**

(30) Priorität: 12.12.2017 DE 102017222498
(71) Anmelder: Baumüller Nürnberg GmbH, 90482 Nürnberg (DE)
(72) Erfinder: LELKES, András, 90491 Nürnberg (DE)
(74) Vertreter: FDST Patentanwälte

(57) **Zusammenfassung**

Die Erfindung betrifft ein Verfahren zum Betrieb eines elektromotorischen Antriebssystems (2) aufweisend mindestens einen Elektromotor (4), wobei eine Betriebszustandsgröße (Iᵤ, Iᵥ, I_{w}) des Elektromotors (4) erfasst wird, wobei anhand der Betriebszustandsgröße (Iᵤ, Iᵥ, I_{w}) ein Raumzeiger (R, R') bestimmt wird, wobei aus dem zeitlichen Verlauf des Raumzeigers (R, R') eine Ortskurve (O) als ein digitaler Bilddatensatz (78) erzeugt wird, wobei ein Maschinenlernverfahren (42) vorgesehen ist, welchem in einer Lernphase eine Anzahl von Ortskurven für unterschiedliche, vorbekannte Betriebszustände des Elektromotors (4) als Referenzkurven (Refₙ) antrainiert werden, wobei die Ortskurve (O) zur Bestimmung eines aktuellen Ist-Betriebszustands des Elektromotors (4) mittels des Maschinenlernverfahrens (42) mit der Anzahl von Referenzkurven (Refₙ) in einem Merkmalsvergleich (44) ausgewertet wird, und wobei der Elektromotor (4) anhand des Merkmalsvergleichs (44) angesteuert und/oder geregelt wird.

## Beschreibung

Die Erfindung betrifft ein Verfahren zum Betrieb eines elektromotorischen Antriebssystems aufweisend mindestens einen Elektromotor. Die Erfindung betrifft weiterhin ein nach einem derartigen Verfahren arbeitendes oder betriebenes elektromotorisches Antriebssystem.

Ein elektromotorisches Antriebssystem der eingangs genannten Art umfasst beispielsweise einen an ein Versorgungsnetz angeschlossenen Umrichter, insbesondere einen Frequenzumrichter, mit einem Gleichstromzwischenkreis zur Bereitstellung einer Zwischenkreisspannung für eine Anzahl von Elektromotoren. Die Elektromotoren werden hierbei als Drehstrommotoren mittels gesteuerter Strom- oder Wechselrichter an die Zwischenkreisspannung, insbesondere in einer Parallelschaltung, angeschlossen. Die (Motor-)Stromrichter umfassen hierbei typischerweise eine Anzahl von Halbleiterschaltern, die als eine gesteuerte Brückenschaltung die Zwischenkreisspannung beispielsweise in eine dreiphasige Motorspannung umwandeln.

Ebenso denkbar sind auch elektromotorische Antriebssysteme, bei welchen die Elektromotoren als netzgespeiste Motoren im Wesentlichen direkt an den Zwischenkreis oder das Versorgungsnetz angeschlossen sind.

Derartige Antriebssysteme weisen hierbei insbesondere gesteuerte Elektromotoren auf. Zum Beispiel sind hierfür Elektromotoren bekannt, bei denen ein gegenüber einem Stator drehbar gelagerter Rotor durch ein magnetisches Drehfeld angetrieben wird. Hierzu werden Phasenwicklungen des Stators (Statorwicklung) mit einem entsprechenden elektrischen Dreh- oder Motorstrom beaufschlagt, welcher mittels eines an die Brückenschaltung des Stromrichters signaltechnisch gekoppelten Controllers gesteuert und/oder geregelt wird, sodass ein möglichst sicherer und zuverlässiger Betrieb des Elektromotors erreicht ist.

Elektromotorische Antriebssysteme sind trotz regelmäßiger Wartung und Reparatur fehleranfällig. Fehler eines einzelnen Elektromotors, welche eine ungewünschte Beeinträchtigung der Motorfunktion bewirken, führen hierbei häufig zu nachteiligen Auswirkungen auf das gesamte Antriebssystem. Dadurch werden Betriebskosten, Produktqualität und die Betriebssicherheit des Antriebssystems nachteilig beeinflusst.

Es ist daher wünschenswert derartige Fehler im Betrieb des Antriebssystems bzw. des Elektromotors frühzeitig und zuverlässig zu erfassen oder zu erkennen. Hierzu werden häufig unterschiedliche Betriebszustands- oder Phasengrößen des Stromrichters und/oder des Elektromotors erfasst und ausgewertet. Unter einer Phasengröße ist insbesondere eine einer einzelnen Motorphase zugeordnete physikalische Größe, wie beispielsweise ein Phasenstrom oder eine Phasenspannung oder ein Phasenwert eines Motorflusses zu verstehen.

Aus der DE 10 2004 030 076 A1 ist ein elektrischer Antrieb mit einem Antriebsregler und mit einem Elektromotor sowie mit einer Kontrolleinrichtung zur Erfassung und Überwachung von Schwellwerten elektrischer und/oder mechanischer Betriebszustandsgrößen bekannt. Die Kontrolleinrichtung weist eine Zusatzüberwachung zur Analyse der Betriebszustandsgrößen zum Zwecke einer Früherkennung eventueller Abweichungen von Sollvorgaben auf. Hierzu erfasst die Kontrolleinrichtung mittels geeigneter Sensoren Betriebszustandsgrößen wie beispielsweise eine Motortemperatur oder eine Motordrehzahl. Die erfassten Betriebszustandsgrößen werden hierbei im Zeit- und/oder Frequenzbereich analysiert.

Die DE 10 2014 100 945 A1 beschreibt ein Verfahren zur Erkennung von Fehlern in einer Maschine mit zumindest einer elektrischen Antriebseinheit zum Antrieb einer Baugruppe. Hierzu wird ein Frequenzspektrum einer die elektrische Leistungsaufnahme der Antriebseinheit charakterisierenden Betriebszustandsgröße ermittelt und hinsichtlich auf Fehler hinweisenden Auffälligkeiten ausgewertet.

Zur Auswertung und/oder Fehlerdiagnose ist es beispielsweise ebenso möglich, die Phasengrößen mittels einer Ortskurve einer Raumzeigerdarstellung auszuwerten.

Unter einer Raumzeigerdarstellung ist insbesondere die Darstellung von physikalischen Größen eines Dreiphasensystems, wie insbesondere eines dreiphasigen Elektromotors, als (Raum-)Zeiger in einem Koordinatensystem einer komplexen Ebene zu verstehen. Die komplexe Ebene ist hierbei im Wesentlichen effektiv in einer Querschnittsebene des Elektromotors angeordnet. Der zeitliche Verlauf des Raumzeigers erzeugt im Wesentlichen die Ortskurve, welche im Normalbetrieb zentriert um den Ursprung des Koordinatensystems der komplexen Ebene angeordnet ist.

Die Ortskurve weist für unterschiedliche Betriebszustände des Elektromotors und/oder des diesen speisenden Stromrichters jeweils eine unterschiedliche Form oder einen Verlauf oder ein geometrisches Muster auf. Fehler der Maschine führen zu Abweichungen der Ortskurve von einer bestimmten Form (/Verlauf/Muster) und sind somit einfach und frühzeitig erkennbar. So sind beispielsweise Fehler hinsichtlich einer Luftspaltexzentrizität zwischen dem Rotor und dem Stator sowie Phasenfehler oder Windungsschlüsse der Motorphasen als charakteristische Formen und Muster der Ortskurve frühzeitig und zuverlässig erkennbar.

In der DE 39 38 154 A1 ist ein Verfahren zum Erkennen des Sättigungszustands von Stromwandlern offenbart, bei welchem ein sekundärer Wandlerstrom als Betriebszustandsgröße erfasst und hieraus Raumzeiger als Maß für den Sättigungszustand bestimmt wird. Der Sättigungszustand wird hierbei mittels einer Überwachung der Bahnelemente der Ortskurve eines drehenden und/oder eines ruhenden Raumzeigers bestimmt. Insbesondere werden hierbei die Winkel zwischen zwei aufeinanderfolgenden Bahnelementen der Ortskurve sowie deren Beträge ausgewertet.

Die EP 1 291 663 A1 offenbart ein Verfahren zur Erkennung von Motorfehlern mittels Fluktuationen eines Raumzeigers. Hierzu wird ein Motorstrom als Betriebszustandsgröße erfasst und ein entsprechender Raumzeiger bestimmt. Der Raumzeiger wird insbesondere hinsichtlich dessen Drehwinkels auf Änderungen und Fluktuationen überwacht. Anhand der Fluktuationen wird anschließend auf den aktuellen Betriebszustand - und somit gegebenenfalls auf einen Fehler - geschlossen.

Die DE 11 2004 002 642 T5 beschreibt ein Verfahren zur Plausibilitätsprüfung eines elektrischen Drei-Phasen-Systems. Bei dem bekannten Verfahren werden mindestens zwei der drei Phasenströme als Betriebszustandsgröße erfasst und ein entsprechender Raumzeiger berechnet. Im Betrieb des Systems wird ein Absolutwert des Raumzeigers mit einem hinterlegten Referenzwert an einer vorgegebenen Zeigerposition verglichen. Bei einem Messfehler der Phasenströme weicht der Absolutwert von dem Referenzwert ab und das System wird gestoppt.

Die AT 412 248 B offenbart ein Verfahren zum Betrieb einer Drehfeldmaschine, bei welchem aus einem Flußraumzeiger und aus einem Statorspannungsraumzeiger der Drehstrommaschine ein Sollwert eines Statorstromraumzeigers bestimmt wird. Der Sollwert des Statorstromraumzeigers wird anschließend mit einem Istwert des Statorstromraumzeigers verglichen. Durch den Vergleich der entsprechenden Soll- und Ist-Ortskurven ist ein Rückschluss auf eine Asymmetrie der Drehstrommaschine ermöglicht.

Der Erfindung liegt die Aufgabe zugrunde, ein besonders geeignetes Verfahren zum Betrieb eines elektromotorischen Antriebssystems anzugeben. Der Erfindung liegt weiterhin die Aufgabe zugrunde, ein besonders geeignetes elektromotorisches Antriebssystem anzugeben, welches mit einem solchen Verfahren betrieben oder betreibbar ist.

Hinsichtlich des Verfahrens wird die Aufgabe mit den Merkmalen des Anspruchs 1 und hinsichtlich des elektromotorischen Antriebssystems mit den Merkmalen des Anspruchs 10 erfindungsgemäß gelöst. Vorteilhafte Ausgestaltungen und Weiterbildungen sind Gegenstand der jeweiligen Unteransprüche.

Das erfindungsgemäße Verfahren ist zum Betrieb eines elektrischen oder elektromotorischen Antriebssystems geeignet und ausgestaltet. Das Antriebssystem weist hierbei mindestens einen Elektromotor auf, welcher beispielsweise als ein netzgespeister Motor oder mittels eines Stromrichters an ein elektrisches Versorgungsnetz angeschlossen ist.

Im Betrieb des Antriebssystems wird eine Betriebszustandsgröße des Elektromotors erfasst. Unter einer Betriebszustandsgröße ist insbesondere eine den Betriebszustand des Elektromotors charakterisierende Zustandsgröße, beispielsweise eine physikalische Größe oder ein Steuer- und/oder Regelwert bzw. -signal zu verstehen.

Verfahrensgemäß ist vorgesehen, dass aus der erfassten Betriebszustandsgröße ein Raumzeiger bestimmt wird. Mit anderen Worten wird unter Verwendung einer erfassten oder gemessenen Betriebszustandsgröße ein Raumzeiger berechnet. In einer denkbaren Ausführungsform wird der Elektromotor vorzugsweise mit einer mehrphasigen Wechselspannung bzw. mit einem mehrphasigen Drehstrom betrieben. Der Raumzeiger ist hierbei beispielsweise mittels einer 3/2-Transformation aus den Phasenwerten der Betriebszustandsgröße berechnet. Der berechnete Raumzeiger ändert seine Richtung oder Orientierung in einer entsprechenden komplexen Ebene oder in einem Koordinatensystem mit einer Änderungsgeschwindigkeit, welche der Änderungsgeschwindigkeit der Betriebszustandsgröße entspricht. Dadurch weist der Raumzeiger eine entsprechende Perioden- oder Änderungsdauer für die Bewegung in dem Koordinatensystem auf.

Der Raumzeiger weist somit einen zeitlichen Verlauf auf, wobei verfahrensgemäß anhand dieses Verlaufs eine Ortskurve erzeugt wird. Als Ortskurve ist hierbei insbesondere der zeitliche Verlauf einer Spitze des vektorartigen Raumzeigers in dem Koordinatensystem für mindestens eine vollständige Änderungsdauer des Raumzeigers zu verstehen. Ebenso denkbar ist beispielsweise eine Ortskurve mit mehreren direkt aufeinanderfolgenden Bewegungen des Raumzeigers, insbesondere bei Betriebszustandsgrößen mit transienten Verläufen. Unter der aktuellen Ortskurve wird somit insbesondere die jeweils aktuelle Bewegung des Raumzeigers während einer jeweiligen Änderungsdauer oder einer Anzahl von Bewegungen des Raumzeigers während einer eine entsprechende Anzahl von Änderungsdauern aufweisenden Erfassungs- oder Messdauer verstanden.

Diese aktuelle Ortskurve wird verfahrensgemäß mittels eines Maschinenlernverfahrens anhand einer Anzahl von hinterlegten Referenzkurven als Maß für unterschiedliche, vorbekannte Betriebszustände des Elektromotors ausgewertet.

Unter Maschinenlernverfahren oder maschinellen Lernen ist insbesondere eine Generierung von Wissen aus Erfahrung zu verstehen, bei welcher ein künstliches System aus Beispielen lernt und diese nach Beendigung einer solchen Lernphase verallgemeinern kann. Dies bedeutet, dass die Beispiele nicht auswendig gelernt werden, sondern dass das System Muster und Gesetzmäßigkeiten in den Lern- oder Trainingsdaten bestimmt. Das Maschinenlernverfahren ist hierbei beispielsweise als ein Lern- oder Prognosealgorithmus ausgeführt, welcher mittels eines Controllers ausgeführt wird. Die Referenzkurven repräsentieren oder entsprechen somit im Wesentlichen Ortskurven vorbekannter Betriebszustände, welche in einer Lernphase als Trainingsdaten dem Maschinenlernverfahren beigebracht oder antrainiert wurden.

Anhand der Auswertung der Ortskurve durch das Maschinenlernverfahren wird der Elektromotor angesteuert und/oder geregelt. Dadurch ist ein besonders geeignetes Verfahren zum Betrieb des elektromotorischen Antriebs realisiert.

Bei einem Antriebssystem mit mehreren Elektromotoren ist es beispielsweise denkbar, dass jeder Elektromotor einzeln durch ein jeweiliges Maschinenlernverfahren überwacht wird. Zusätzlich oder alternativ ist ein übergeordnetes Maschinenlernverfahren denkbar, welches im Betrieb alle Elektromotoren gemeinsam- und somit das Antriebssystem selbst - überwacht.

Durch die Auswertung der Ortskurve anhand der Referenzkurven ist auf einfache Art und Weise eine zuverlässige und betriebssichere Bestimmung des aktuellen (Ist-)Betriebszustands des Antriebssystems ermöglicht. Insbesondere ist somit eine nichtinvasive und einfache Bestimmung des Betriebszustands während des Betriebs des Antriebssystems möglich. Dadurch ist eine zuverlässige und sichere Ansteuerung und/oder Regelung des Elektromotors und/oder eines damit gekoppelten Stromrichters realisiert.

Die Erfindung geht insbesondere von der Erkenntnis aus, dass sich der aktuelle Betriebszustand in einfacher Art und Weise aus einer Auswertung des aktuellen Raumzeigerverlaufs, also aus der Ortskurve, anhand vorbekannter Verläufe, also den Referenzkurven, ergibt. Dadurch ist mittels eines entsprechend trainierten Maschinenlernverfahrens eine besonders kostengünstige und zuverlässige Ist-Betriebszustandsbestimmung realisiert, welche in der Folge eine besonders betriebssichere und effektive Einstellung und/oder Regelung des Elektromotors im Betrieb des elektromotorischen Antriebssystems ermöglicht.

In einer vorteilhaften Ausführung des Verfahrens wird bei dem Maschinenlernverfahren jeder Referenzkurve eine Ansteuer- und/oder Regelstrategie des Elektromotors zur Erzeugung eines gewünschten Soll-Betriebszustands des Elektromotors bzw. des Antriebssystems zugeordnet. Der gewünschte Soll-Betriebszustand ist somit insbesondere eine Sollvorgabe für einen zukünftigen Betriebszeitpunkt des Elektromotors bzw. des Antriebssystems. Mit anderen Worten wird den Referenzkurven ein jeweiliges Steuer- und/oder Regelprogramm zugeordnet, welches insbesondere den Elektromotor oder einen diesen speisenden Stromrichter vorausschauend hinsichtlich einer Realisierung oder Bewirkung des Soll-Betriebszustands steuert und/oder regelt. Dies bedeutet, dass die Ansteuer- und/oder Regelstrategien zusammen mit den Referenzkurven dem Maschinenlernverfahren derart antrainiert werden, dass bei einer Auswertung der Ortskurve automatisch ein jeweiliges Steuer- und/oder Regelprogramm gestartet wird, wenn das Maschinenlernverfahren die Ortskurve anhand der zugeordneten Referenzkurve erkennt. Dadurch ist eine frühzeitige und effektive Ansteuerung und/oder Regelung des Antriebssystems ermöglicht.

In einer geeigneten Weiterbildung wird der Elektromotor bei einem positiven Auswerteergebnis, bei welchem das Maschinenlernverfahren die aktuelle Ortskurve als einen vorbekannten Betriebszustand erkennt, also die Ortskurve im Wesentlichen einer der gelernten oder antrainierten Referenzkurven entspricht, vorrausschauend auf den zugeordneten Soll-Betriebszustand angesteuert und/oder geregelt. Dadurch ist ein besonders effektiver und betriebssicherer Betrieb des elektromotorischen Antriebssystems gewährleistet.

Anhand der Auswertung der Ortskurve anhand der Referenzkurven ist eine einfache und frühzeitige Bestimmung des jeweils aktuellen Betriebszustands der elektrischen Maschine realisiert. Diesem Ist-Betriebszustand beziehungsweise der Referenzkurve ist hierbei eine entsprechende Ansteuer- und/oder Regelstrategie zur Bewirkung eines Soll-Betriebszustands zugeordnet, sodass der Elektromotor und somit das Antriebssystem, anhand eines aktuellen Betriebszustands zuverlässig und effektiv hinsichtlich eines zukünftigen Betriebszustands angesteuert und/oder geregelt werden können.

Mit anderen Worten entspricht die Ortskurve einem Ist-Betriebszustand der elektrischen Maschine, welcher mittels des Maschinenlernverfahrens anhand der Referenzkurven der vorbekannten Betriebszustände ermittelt und erkannt wird. Bei einem positiven Auswerteergebnis entspricht die Ortskurve einem vorbekannten bzw. antrainierten Betriebszustand. Dies bedeutet, dass der aktuelle Ist-Betriebszustand des Elektromotors bzw. des Antriebssystems in diesem Fall bekannt ist. Diesem Betriebszustand ist weiterhin eine Ansteuer- und/oder Regelstrategie zur Bewirkung eines zukünftigen (Soll-)Betriebszustands zugeordnet, mittels welchem der Elektromotor optimal und effektiv angesteuert und/oder geregelt wird. Dadurch wird ein gewünschter zukünftiger Soll-Betriebszustand des elektromotorischen Antriebssystems auf einfache und betriebssichere Art und Weise bereits frühzeitig bestimmt, sodass dieser besonders zweckmäßig und effektiv mittels des Elektromotors oder eines zugeordneten Stromrichters realisierbar ist. Dadurch ist ein besonders effektiver, ökonomischer und ressourcenschonender Betrieb des elektromotorischen Antriebssystems ermöglicht.

In einer besonders zweckmäßigen Ausbildung wird der Elektromotor bei einem negativen Auswerteergebnis, bei welchem die aktuelle Ortskurve nicht als ein vorbekannter Betriebszustand erkannt wird, also die Ortskurve im Wesentlichen keiner der Referenzkurven entspricht, sicher abgeschaltet. Zusätzlich oder alternativ wird hierbei das gesamte Antriebssystem sicher abgeschaltet. Ein negatives Auswerteergebnis entspricht im Wesentlichen einem unbekannten Betriebszustand des Elektromotors bzw. des Antriebssystems und somit mit hoher Wahrscheinlichkeit einem Fehler oder einer Beeinträchtigung der gewünschten Motorfunktion, so dass der Elektromotor zuverlässig und zeitnah abgeschaltet wird. Unter dem Begriff "sicher" wird hierbei die Erfüllung einer Sicherheitsfunktion, beispielsweise einem als Safe-Torque-Off (STO) bezeichneten sicheren Halt des Elektromotors, verstanden, sodass nach einer Auslösung der Sicherheitsfunktion ein sofortiger Stopp des Elektromotors bzw. des Antriebssystems bewirkt wird, und dieser(/s) eine Ruhelage zuverlässig erreicht.

Im Betrieb des elektromotorischen Antriebssystems wird der aktuelle Raumzeiger somit fortlaufend insbesondere dahingehend untersucht, ob in der Ortskurve neue Merkmale enthalten sind, welche noch nicht vorbekannt sind. Wird ein solches unbekanntes Merkmal erfasst, und somit ein negatives Auswerteergebnis bewirkt, wird der Elektromotor aus Sicherheitsgründen vorzugsweise unverzüglich sicher abgeschaltet.

Mit anderen Worten bewirkt das Maschinenlernverfahren eine Anomalieerkennung. Dies bedeutet, dass das Maschinenlernverfahren zumindest mit einer Ortskurve oder Referenzkurve trainiert wurde, welche einem fehlerfreien Betriebszustand des Elektromotors repräsentiert, und im Betrieb des elektromotorischen Antriebssystems erkennt, wenn eine wesentliche Abweichung hiervon auftritt.

Zusätzlich zu dem sicheren Abschalten des Elektromotors bzw. des Antriebssystems ist es beispielsweise möglich, dass das Maschinenlernverfahren hierbei eine Warnung oder eine Benachrichtigung an einen Benutzer veranlasst, beispielsweise durch eine Betätigung einer Warnleuchte und/oder einer Warnsirene.

Die Auswertung und der dadurch zumindest implizit bewirkte Vergleich der Ortskurve mit bekannten Betriebszuständen ermöglicht somit eine frühzeitige und zuverlässige Fehlererkennung im Betrieb des elektromotorischen Antriebssystems. Dadurch ist ein besonders betriebssicherer Betrieb des elektromotorischen Antriebssystems gewährleistet.

In einer geeigneten Ausbildungsform ist hierbei im Maschinenlernverfahren zweckmäßigerweise ein gewisser Schwellwertbereich hinsichtlich einer Abweichung zwischen der Ortskurve und der oder jeder Referenzkurve vorgesehen. Mit anderen Worten wird ein negatives Auswerteergebnis erst bewirkt, wenn die Abweichung der Ortskurve von der Referenzkurve diesen Schwellwertbereich erreicht oder überschreitet oder dauerhaft überschreitet. Dies bedeutet, dass die Ortskurve wesentlich oder signifikant von der oder jeder Referenzkurve abweicht oder sich von dieser(/n) deutlich unterscheidet. Somit ist eine gewisse Bagatellgrenze oder Mindestabweichung definiert, wodurch beispielsweise zufällige Abweichungen aufgrund von elektrischen Rauschens oder dergleichen nicht eine ungewollte oder falsche Zuordnung eines Betriebszustands oder einen Fehler bewirken. Dadurch wird der Betrieb des elektromotorischen Antriebssystems weiter verbessert.

In einer vorteilhaften Weiterbildung wird bei einem negativen Auswerteergebnis die aktuelle Ortskurve dem Maschinenlernverfahren als eine neue Referenzkurve hinzugefügt oder antrainiert und hierzu ein neuer Soll-Betriebszustand, also eine neue Ansteuer- und/oder Regelstrategie, zugeordnet. Mit anderen Worten wird bei einem negativen Auswerteergebnis aus der Ortskurve eine neue Referenzkurve extrahiert und dann dem Maschinenlernverfahren antrainiert, um zukünftig auf diese als vorbekannten Betriebszustand zurückzugreifen. Die neue Referenzkurve ist dann eine gelernte Referenzkurve.

Durch die neue Referenzkurve ist es somit möglich, neue, vorher unbekannte, Betriebszustände zu charakterisieren und dem Maschinenlernverfahren für den zukünftigen Betrieb hinzuzufügen, sodass anhand des neuen Soll-Betriebszustands, bei einem zukünftigen Auftreten einer der neuen Referenzkurve entsprechenden Ortskurve, eine möglichst optimale und zweckmäßige Ansteuer- und/oder Regelstrategie des Elektromotors bewirkt wird. Dadurch wird ein gleichmäßiger und möglichst unterbrechungsfreier Betrieb des elektromotorischen Antriebs ermöglicht.

Im Gegensatz zum Stand der Technik, bei welchen künstliche Intelligenz-Algorithmen im Wesentlichen als eine Black-Box funktionieren, welche den Betriebszustand mittels eines für einen Benutzer nicht oder lediglich schwer nachvollziehbaren Verfahrens bestimmen, wird bei dem erfindungsgemäßen Verfahren bei einem unbekannten Betriebszustand oder einer Fehlererkennung die als Grundlage dienende Ortskurve nach der Auswertung nicht verworfen, sondern in diesem Fall als eine neue Referenzkurve archiviert. Anhand dieser Aufnahme oder Archivierung ist es für einen Benutzer leichter nachvollziehbar, was das negative Auswerteergebnis ausgelöst hat. Hierbei ist es beispielsweise denkbar, dass einem Benutzer diese Informationen auf einem Anzeigegerät grafisch dargestellt werden, wobei beispielsweise die aktuelle Ortskurve sowie weitere Informationen (Zeitpunkt, aktueller Betriebszustand usw.) angezeigt werden.

In einer bevorzugten Ausgestaltung wird der neue Soll-Betriebszustand beziehungsweise die neue Ansteuer- und/oder Regelstrategie zu Bewirkung dieses Soll-Betriebszustands in einem überwachten Maschinenlernverfahren erzeugt. Hierzu wird die neue Referenzkurve einem bestimmten (Ist-)Betriebszustand der Maschine zugeordnet. Mit anderen Worten wird die neue Ansteuer- und/oder Regelstrategie in einem Maschinenlernverfahren mit Unterweisung erzeugt. Dadurch ist eine besonders vorteilhafte und zuverlässige Erzeugung die neue Ansteuer- und/oder Regelstrategie bzw. Soll-Betriebszustände gewährleistet, welche einen betriebssicheren und möglichst optimalen Betrieb des elektromotorischen Antriebssystems ermöglichen.

Unter einem überwachten Maschinenlernverfahren ist hierbei insbesondere ein Algorithmus zu verstehen, welcher eine Funktion aus gegebenen Paaren von Ein- und Ausgaben lernt. Hierbei wird von einem Benutzer während des Lernens ein korrekter Funktionswert zu einer Eingabe bereitgestellt. Bei einem überwachten Maschinenlernen wird somit dem Verfahren nach mehreren Rechengängen mit unterschiedlichen Ein- und Ausgaben die Fähigkeit antrainiert Muster zu erkennen und Assoziationen herzustellen.

In dieser Ausgestaltung des Verfahrens wird dem Maschinenlernverfahren somit durch einen Benutzer zu einer neuen Referenzkurve (Eingabe) der Ist-Betriebszustand des Elektromotors bzw. des Antriebssystems sowie eine damit verknüpfte optimale Ansteuer- und/oder Regelstrategie (Funktion) bereitgestellt. Nach mehreren Rechengängen erkennt das Maschinenlernverfahren somit Muster der Referenzkurven und assoziiert diese mit der jeweils aktuellen Ortskurve, wodurch eine entsprechende Ansteuer- und/oder Regelstrategie ausgelöst wird.

Das Maschinenlernverfahren wird beispielsweise von einer Lernmaschine ausgeführt. Diese ist vorzugsweise ein Teil eines Controllers des Elektromotors und/oder des Antriebssystems. Die Lernmaschine wird in dieser Ausgestaltung in einem Lernverfahren trainiert. Einer bestimmten Ortskurve mit einer noch unbekannten Referenzkurve wird ein bestimmter Betriebszustand zugeordnet. Der an sich bekannte zukünftige (Soll-)Betriebszustand für den an sich bekannten (Ist-)Betriebszustand soll nun durch Erkennung der Ortskurve bzw. der neuen Referenzkurve einstellbar gemacht werden, wobei aber insbesondere die entsprechende Ansteuer- und/oder Regelstrategie unbekannt ist. Im Rahmen des Maschinenlernverfahrens wird nunmehr insbesondere in einem Trainingsverfahren der bestimmte Betriebszustand der neuen Referenzkurve als der aktuelle Betriebszustand hergestellt und anschließend dadurch eine entsprechende Ansteuerung und/oder Regelung des Elektromotors der gewünschte Soll-Betriebszustand hervorgerufen, welche dann durch eine Ansteuer- und/oder Regelstrategie, also einen Ablauf von Steuer- und/oder Regelbefehlen oder -signalen charakterisiert ist, welcher bestimmt und mit der neuen Referenzkurve verknüpft wird. Die neue Referenzkurve ist dann eine gelernte Referenzkurve und steht fortan als vorbekannter Betriebszustand mit einem zugeordneten Soll-Betriebszustand zur Verfügung.

Hierbei ist es möglich, dass der Betriebszustand der neuen Referenzkurve ein Fehlerzustand des Antriebssystems bzw. des Elektromotors ist, wobei die entsprechende Ansteuer- und/oder Regelstrategie hierbei insbesondere eine Sicherheitsfunktion des Elektromotors bewirkt, so dass vorzugsweise ein sicherer Stopp als Soll-Betriebszustand erreicht wird.

In einer denkbaren Ausgestaltungsform sind die oder jede vorbekannte Referenzkurve in einem neuronalen Netz integriert. Mit diesem neuronalen Netz wird untersucht, ob die Ortskurve vorbekannte Merkmale aufweist, indem die Ortskurve des Raumzeigers bestimmt und als ein Eingangssignal des neuronalen Netzes verwendet wird. Ein wesentlicher Vorteil eines neuronalen Netzes besteht insbesondere darin, dass dieses nicht zwingend in einem Lernverfahren mit Unterweisung trainiert werden muss, sondern auch ohne Unterweisung lernen und arbeiten kann. Eine vorbekannte Referenzkurve ist dann nicht in einem Speicher hinterlegt, sondern in die Topologie des neuronalen Netzes integriert.

In einer alternativen Ausgestaltungsform ist also auch ein Maschinenlernverfahren ohne Unterweisung realisierbar. Dies bedeutet, dass die Lernmaschine nicht trainiert werden muss, sondern vollständig selbsttätig lernt. In dieser Ausgestaltungsform erfasst das elektromotorische Antriebssystem neben den Betriebszustandsgrößen zur Bestimmung des Raumzeigers und der Ortskurve vorzugsweise weitere Betriebszustandsgrößen, wie beispielsweise die Motortemperatur oder die Motordrehzahl. Dadurch ist das Maschinenlernverfahren ohne Unterweisung unter Zuhilfenahme der zusätzlichen Betriebszustandsgrößen dazu geeignet und ausgestaltet, den jeweiligen Betriebszustand selbsttätig zu erfassen und einen geeigneten Soll-Betriebszustand als Ansteuer- und/oder Regelstrategie zu ermitteln.

Analog zum Maschinenlernverfahren mit Unterweisung wird auch das Maschinenlernverfahren ohne Unterweisung zweckmäßigerweise im Normalbetrieb des elektromotorischen Antriebssystems durchgeführt. Bei der Ausgestaltungform mit einem neuronalen Netz lernt dieses dann selbstständig, die integrierten Referenzkurven jeweils einem bestimmten zukünftigen Soll-Betriebszustand zuzuordnen und eine entsprechende Ansteuer- und/oder Regelstrategie des Elektromotors zur Bewirkung dieses Soll-Betriebszustands zu erzeugen. Dies erfolgt beispielsweise über einen oder mehrere Zusatzsensoren des elektromotorischen Antriebssystems oder - wie vorstehend beschrieben - durch eine Rückmeldung des Benutzers (Betreibers, Lehrers).

In einer zweckmäßigen Ausführung wird die Auswertung der Ortskurve mit der oder jeder Referenzkurve mittels eines Klassifikators als eine Klassifikation durchgeführt, bei welcher ein geometrisches Muster der Ortskurve als Merkmal oder Merkmalsvektor bestimmt und untersucht wird, ob dieses Muster oder Merkmal einem vorbekannten geometrischen Muster oder Merkmal(-vektor) einer der antrainierten oder gelernten Referenzkurven entspricht. Dadurch ist eine besonders effektive und zweckmäßige Auswertung der Ortskurve anhand der oder jeder Referenzkurve ermöglicht.

Dies bedeutet, dass die Ortskurve mittels des Klassifikators einer Klassifikation hinsichtlich der unterschiedlichen Referenzkurven unterzogen wird. Bei der Klassifikation wird das geometrische Muster des zeitlichen Verlaufs des berechneten Raumzeigers und der zugrunde liegende Betriebszustand der elektrischen Maschine bestimmt, indem untersucht wird, ob die Ortskurve vorbekannte Merkmale oder einen vorbekannten Merkmalsvektor aufweist, welcher zu einem vorbekannten Betriebszustand gehört. Dem vorbekannten Merkmalsvektor, das bedeutet der vorbekannten Klasse, ist ein Soll-Betriebszustand mit einer entsprechenden Ansteuer- und/oder Regelstrategie des Elektromotors zugeordnet, welche angewandt wird, wenn die Ortskurve einen vorbekannten Merkmalsvektor aufweist, das bedeutet wenn der aktuelle (Ist-)Betriebszustand erkannt wird. Es wird also der Betriebszustand des elektromotorischen Antriebssystems bzw. des Elektromotors aus dem zeitlichen Verlauf des berechneten Raumzeigers ermittelt, und anhand des diesem aktuellen Betriebszustand zugeordneten zukünftigen Soll-Betriebszustands wird der Elektromotor eingestellt und/oder geregelt. Dies bedeutet, dass ein bestimmter Soll-Betriebszustand eingestellt und/oder geregelt wird, welcher dem aktuellen Ist-Betriebszustand zugeordnet ist, um in derjenigen Betriebssituation, welche Anlass des Ist-Betriebszustands ist, einen optimalen Betrieb der elektrischen Maschine sicherzustellen.

Im Falle eines negativen Auswerteergebnisses wird die aktuelle Ortskurve vorzugsweise einer Merkmalsextraktion unterzogen, bei welcher ein neuer und insbesondere individueller, das bedeutet betriebszustandsspezifischer Merkmalsvektor erzeugt wird, welcher als ein zusätzlicher vorbekannter Merkmalsvektor beziehungsweise als Referenzkurve gespeichert (hinterlegt) wird. Aus der Ortskurve wird demnach ein neuer Merkmalsvektor extrahiert und dann gespeichert, um zukünftig auf diesen als vorbekannten Merkmalsvektor beziehungsweise Referenzkurve zurückzugreifen. Der neue Merkmalsvektor ist dann ein gelernter Merkmalsvektor. Insgesamt definiert und lernt die elektrische Maschine also eine neue Klasse, welche fortan zur Klassifikation zur Verfügung steht. Im Zuge des Vergleichs erfolgt somit insbesondere eine (digitale) Mustererkennung von geometrischen Mustern oder Merkmalen der Ortskurve hinsichtlich der oder jeder Referenzkurve.

Im Falle einer dreiphasigen Drehstrom-Maschine als Elektromotor weisen die Phasenströme als Betriebszustandsgrößen zum Betrieb des Elektromotors insbesondere einen im Wesentlichen sinusförmigen zeitlich variierenden Verlauf auf. Ein daraus berechneter Raumzeiger weist hierbei eine im Wesentlichen kreisrunde Ortskurve auf. Abweichungen von dieser Kreisform als geometrisches Muster weisen insbesondere auf einen potentiellen Fehler des Antriebssystems, beispielsweise des Elektromotors und/oder des Stromrichters, hin. So bewirkten beispielsweise Windungsschlüsse des Elektromotors eine Verformung der Ortskurve zu einer elliptischen Form. Die dadurch gebildete Hauptachse der elliptischen Ortskurve ist hierbei entlang der fehlerhaften Phasenrichtung orientiert, wobei die Elliptizität der Ortskurve ein Maß für den Schweregrad des Fehlers ist.

Vorzugsweise werden dem Maschinenlernverfahren typische Orts- oder Referenzkurven für bestimmte Fehlerquellen im Elektromotor und/oder im Stromrichter antrainiert. Insbesondere ist es hierbei vorgesehen, dass das Maschinenlernverfahren bei einem Erkennen einer solchen (Fehler-)Referenzkurve eine spezifische Fehlermeldung, insbesondere mit einem Hinweis auf die Fehlerquelle und eventuell auch Empfehlungen für die Behebung des Fehlers, als Teil der assoziierten Ansteuer- und/oder Regelstrategie erzeugt. Dadurch wird einem Benutzer frühzeitig ein fehlerhafter Betrieb des Antriebssystems signalisiert, so dass dieser gegebenenfalls behebend oder vorbeugend eingreifen kann.

Die Ortskurve wird als ein digitaler oder virtueller Bilddatensatz erzeugt. Mit anderen Worten wird die Ortskurve als ein Bild digitalisiert gespeichert oder hinterlegt. Dadurch wird insbesondere die Auswertung hinsichtlich eines geometrischen Musters der Ortskurve vereinfacht. Zur Erkennung von geometrischen Mustern bzw. zur Extraktion der Merkmale oder Merkmalsvektoren der Ortskurve bei einer Erzeugung der Referenzkurven werden hierbei geeigneterweise entsprechende Mustererkennungs- oder Bilderkennungsalgorithmen verwendet, welche den jeweiligen Bilddatensatz verarbeiten.

Mit anderen Worten werden Bilddaten vorbekannter Ortskurve als Trainingsdaten für das Maschinenlernverfahren verwendet, wobei das Maschinenlernverfahren in der Folge dazu geeignet und ausgebildet ist die aktuelle Ortskurve als Bilddatensatz hinsichtlich der vorbekannten Bilder auszuwerten. Dadurch ist ein besonders einfaches und effektives Lernen oder Trainieren des Maschinenlernverfahrens ermöglicht.

In einer geeigneten Weiterbildungsform wird das Bild der Ortskurve vorteilhafterweise in einem Pixel- oder Bildpunkteformat von 2ⁿ×2ⁿ, zum Beispiel 256×256 Pixel oder Bildpunkte, erzeugt und ausgewertet. Hierzu werden die transformierten oder berechneten Werte des Raumzeigers beziehungsweise dessen (Raumzeiger-)Koordinaten beispielsweise mittels Rundung in eine normierte, vorzeichenbehaftete n-Bit Fixpunkt-Darstellung umgewandelt. Die Raumzeiger-Koordinaten des berechneten Raumzeigers zeigen somit stets exakt auf einen jeweiligen Bildpunkt oder Pixel im Bild.

Beispielsweise weisen alle Pixel zu Beginn einen Wert von 0 (Null) auf. Das Bild ist somit zum Beispiel komplett weiß oder hell. Im Zuge des Verfahrens werden diejenigen Pixel, auf welche der Raumzeiger im Zuge seines zeitlichen Verlaufs zeigt, auf einen Wert von 1 gesetzt, also hinsichtlich einer graphischen oder optischen Darstellung des Bildes insbesondere geschwärzt oder verdunkelt. Zur Aufzeichnung der Ortskurve ist es einerseits möglich, dass zunächst die Messwerte und der berechnete Raumzeiger für einen oder mehrere Umläufe des Raumzeigers erfasst und anschließend das daraus resultierende Bild der Ortskurve bestimmt wird. Andererseits ist es möglich, dass Bild der aktuellen Ortskurve kontinuierlich Punkt-für-Punkt sukzessive für jeden berechneten Raumzeiger oder Raumzeiger-Koordinaten direkt zu bestimmen.

Am Ende einer Aufzeichnung ist die Ortskurve des Raumzeigers ohne eine Verwendung zusätzlicher Mittel als digitales oder elektronisches Bild hinterlegt. Dieses Bild besteht aus 2²ⁿ Pixeln oder Bildpunkten, wobei jeder Pixel beispielsweise mittels jeweils einem Bit dargestellt wird. Diese 2²ⁿ Bits werden beispielsweise zur Auswertung zum Klassifikator, zum Beispiel zu dem neuronalen Netz, geführt. Dadurch ist eine besonders einfache Darstellung der Ortskurve realisiert, welche in der Folge einfach ausgewertet werden kann.

In einer ebenso geeigneten Weiterbildungsform ist es bei einer Ortskurve, welche insbesondere mehrere aufeinanderfolgende Umdrehungen des Raumzeigers aufweist, möglich, dass jeder Pixel des Bildes mittels einer Ganzzahl dargestellt wird. Mit anderen Worten werden die Bildpunkte des Bildes nicht als Bits, sondern als Ganzzahlen hinterlegt. Dies bedeutet, dass jedes Mal wenn der Raumzeiger auf einen Pixel zeigt dessen Wert inkrementell erhöht wird. Dadurch ist es möglich, eine zeitliche Verteilung der Raumzeiger-Punkte für aufeinanderfolgende Umdrehungen des Raumzeigers zu erfassen. Zweckmäßigerweise ist hierbei ein oberer Schwellwert zur Vermeidung eines Überlaufs vorgesehen. Dies bedeutet, dass beispielsweise bei einer 8-bit pro Pixel Darstellung der Schwellwert auf 255 (= 2⁸ - 1) begrenzt wird.

In einer denkbaren Ausbildung werden die oder jede Betriebszustandsgröße zur Bestimmung oder Berechnung des Raumzeigers fortlaufend oder kontinuierlich erfasst. Dies bedeutet, dass die Betriebszustandsgrößen im Betrieb des elektromotorischen Antriebssystems im Wesentlichen unterbrechungsfrei erfasst oder gemessen werden. Im Falle einer digitalen Erfassung oder Messung der Betriebszustandsgrößen ist unter kontinuierlich insbesondere eine Erfassungs- oder Messrate (Messgeschwindigkeit) zu verstehen, welche Wesentlich größer als die Änderungsgeschwindigkeit der Betriebszustandsgröße und somit des berechneten Raumzeigers ist. Die Ortskurve setzt sich somit aus mehreren aufeinanderfolgend berechneten Raumzeigern zusammen, welche den zeitlichen Verlauf im Wesentlichen kontinuierlich abbilden.

Somit wird in der Folge auch der Raumzeiger fortlaufend oder kontinuierlich berechnet. Dadurch wird eine besonders genaue Ortskurve bestimmt, sodass bereits geringfügige Abweichungen der Ortskurve von einer der hinterlegten Referenzkurven zuverlässig erkannt werden. Dadurch ist ein besonders betriebssicherer und zuverlässiger Betrieb des elektromotorischen Antriebssystems gewährleistet.

In einer zweckmäßigen Ausbildung wird als Betriebszustandsgröße eine Phasengröße des Elektromotors erfasst. Dadurch ist eine besonders geeignete Betriebszustandsgröße realisiert, welche aufwandsarm und kostengünstig im Betrieb des Elektromotors überwachbar ist.

Der Elektromotor weist in einer möglichen Ausbildungsform eine Anzahl von Motorphasen, insbesondere drei Motorphasen, auf, wobei im Betrieb insbesondere eine der Anzahl der Motorphasen entsprechende Anzahl von Phasengrößen als Betriebszustandsgröße(n) des Elektromotors erfasst wird.

Die Phasengröße ist beispielsweise ein durch die jeweilige Motorphase erzeugtes magnetisches Feld oder eine magnetische Flussdichte, welche mittels eines Magnetfeldsensors erfasst wird. Ebenso denkbar ist es beispielsweise, dass der magnetische Fluss oder die elektrische (Phasen-)Spannung als Phasengröße erfasst wird. Vorzugsweise ist die erfasste Phasengröße der jeweilige Phasenstrom einer Motorphase. Dies bedeutet, dass im Betrieb des Elektromotors insbesondere ein von dem Stromrichter erzeugter Drehstrom des Elektromotors erfasst wird.

In einer alternativen Ausbildung ist es beispielsweise ebenso denkbar, dass als Betriebszustandsgröße ein Steuer- und/oder Regelwert bzw. Regelsignal verwendet wird. Beispielsweise ist es denkbar, dass im Zuge einer Zweipunktregelung, bei welcher ein Stromistwert auf einen Stromsollwert geregelt wird, die Differenz zwischen dem Stromistwert und dem Stromsollwert in einer Motorphase als Phasen- oder Betriebszustandsgröße verwendet wird.

Das erfindungsgemäße elektromotorische Antriebssystem weist mindestens einen Elektromotor auf, welcher beispielsweise mit einem Stromrichter gekoppelt ist. Das elektromotorische Antriebssystem weist weiterhin einen Controller - also ein Steuergerät - auf, welcher bzw. welches zur Durchführung des vorstehend beschriebenen Verfahrens geeignet bzw. vorgesehen und eingerichtet ist. Durch die Auswertung der Ortskurve mit den Referenzkurven ist eine insbesondere hinsichtlich zukünftiger Betriebszustände besonders zuverlässige Bestimmung und Prognose des aktuellen Betriebszustands realisiert, wodurch eine betriebssichere Ansteuerung und/oder Regelung des elektromotorischen Antriebssystems (des Elektromotors) ermöglicht wird.

Der Controller ist hierbei allgemein programm- und/oder schaltungstechnisch zur Durchführung des vorstehend beschriebenen erfindungsgemäßen Verfahrens eingerichtet. Der Controller ist somit konkret dazu eingerichtet, anhand der erfassten Betriebszustandsgröße den Raumzeiger zu berechnen und dessen zeitlichen Verlauf als Ortskurve mittels eines Maschinenlernverfahrens anhand der vorbekannten Referenzkurven auszuwerten sowie anhand dieser Auswertung mittels Ansteuerung und/oder Regelung des Elektromotors oder Stromrichters einen zukünftigen Betriebszustand zuverlässig zu bewirken.

In bevorzugter Ausgestaltung ist der Controller zumindest im Kern durch einen Microcontroller mit einem Prozessor und mit einem Datenspeicher gebildet, in dem die Funktionalität zur Durchführung des erfindungsgemäßen Verfahrens in Form einer Betriebssoftware (Firmware) programmtechnisch implementiert ist, sodass das Verfahren - gegebenenfalls in Interaktion mit einem Benutzer (Betreiber, Anlagen- oder Kraftfahrzeugnutzer) - bei Ausführung der Betriebssoftware in dem Microcontroller automatisch durchgeführt wird.

Der Controller kann im Rahmen der Erfindung alternativ aber auch durch ein nicht programmierbares elektronisches Bauteil, z.B. einen anwendungsspezifischen Schaltkreis (ASIC), gebildet sein, in dem die Funktionalität zur Durchführung des erfindungsgemäßen Verfahrens mit schaltungstechnischen Mitteln implementiert ist.

Die Weiterbildungen des Verfahrens sind sinngemäß auch auf das elektromotorische Antriebssystem übertragbar.

Somit ist es möglich, Fehlerzustände des erfindungsgemäßen Antriebssystems frühzeitig mittels eines Maschinenlernverfahrens oder maschinellen Lernens zu erfassen oder zu prognostizieren. Insbesondere werden hierbei Asymmetrien in den Betriebszustandsgrößen, beispielsweise in einem mehrphasigen Motorsignal (Motorstrom, Motorspannung, Statorfluss etc.) ausgewertet. Derartige Asymmetrien treten beispielsweise im Falle einer Asymmetrie einer Statorwicklung, einem Fehler eines Leistungsteils eines Stromrichters, noch nicht ausgefallener aber bereits nicht mehr voll funktionsfähigen Leistungshalbleiterschaltern oder dergleichen auf.

Verfahrensgemäß wird hierzu zunächst ein Raumzeiger der Betriebszustandsgröße bestimmt, und mittels dessen zeitlichen Verlaufs eine Ortskurve des Antriebssystems oder des Elektromotors ermittelt. Bei einem mehrphasigen Motorsignal als Betriebszustandsgröße weist die Ortskurve im fehlerfreien Fall eine entsprechende zyklische (Dreh-)Symmetrie, beispielsweise eine 60°-Symmetrie im Falle eines dreiphasigen Elektromotors, auf. Bei einem Auftreten von fehlerbedingten Asymmetrien im Signal der Betriebszustandsgröße kommt es zu entsprechenden Abweisungen von der Symmetrie der fehlerfreien Ortskurve, also zu einem Symmetriebruch.

Erfindungsgemäß wird die Ortskurve im Betrieb des Antriebssystems mittels eines Maschinenlernverfahrens, beispielsweise in Form eines Lern- oder Prognosealgorithmus, ausgewertet. Insbesondere wird hierbei eine Mustererkennung mittels einer Bilderkennung oder Bildkategorisierung durchgeführt. Hierzu ist beispielsweise ein neuronales Netz(-werk) mit verborgenen Schichten (hidden layers) denkbar, wobei beispielsweise das sogenannte "deep learning"-Verfahren vorgesehen ist. Ebenso denkbar ist beispielsweise eine Verwendung sogenannter "convolutional neural networks" als skalierbare neuronale Netze zur Bildauswertung der aktuellen Ortskurve.

Nachfolgend sind Ausführungsbeispiele der Erfindung anhand einer Zeichnung näher erläutert. Darin zeigen in vereinfachten und schematischen Darstellungen:
- Fig. 1: ausschnittsweise ein elektromotorisches Antriebssystem mit einem Stromrichter und mit einem Elektromotor sowie mit einem Controller als Steuergerät,
- Fig. 2: ein Flussdiagramm eines Verfahrens zum Betrieb des elektromotorischen Antriebssystems
- Fig. 3 bis Fig. 7: Raumzeigerdiagramme von Ortskurven in unterschiedlichen Betriebszuständen des Elektromotors,
- Fig. 8, Fig. 9: Raumzeigerdiagramme von Ortskurven in unterschiedlichen Betriebszuständen eines alternativen Antriebssystems, und
- Fig. 10: ein neuronales Netz zur Durchführung eines Maschinenlernverfahrens.

Einander entsprechende Teile und Größen sind in allen Figuren stets mit den gleichen Bezugszeichen versehen.

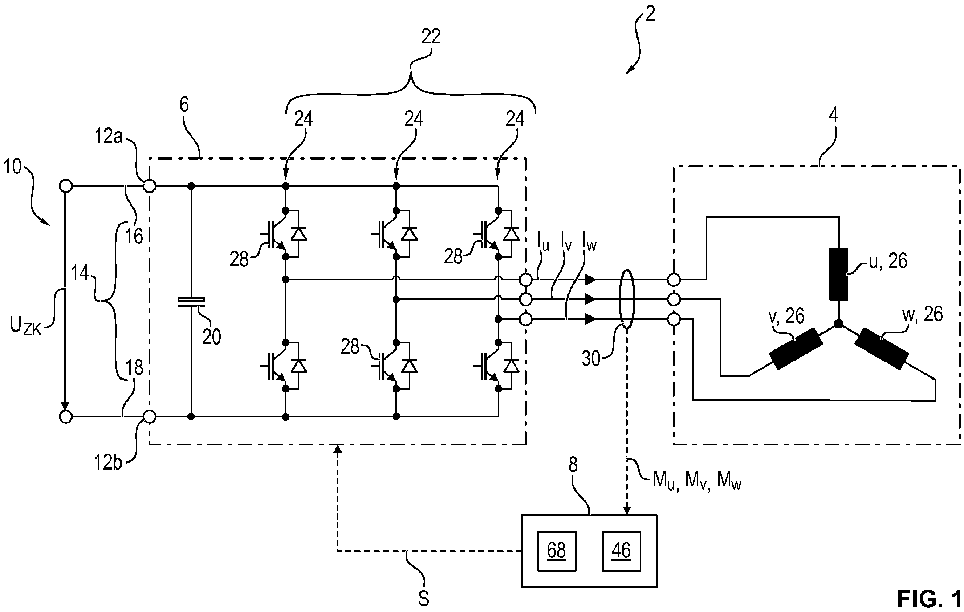

Die Fig. 1 zeigt in schematischer Darstellung ausschnittsweise ein elektromotorisches Antriebssystem 2. Das Antriebssystem 2 weist mindestens einen Elektromotor 4 auf. Der Elektromotor 4 ist in dem Ausführungsbeispiel der Fig. 1 als drehstrombetriebener Synchron- oder Asynchronmotor ausgebildet. Zum Betrieb des Elektromotors 4 weist das Antriebssystem 2 weiterhin einen Stromrichter 6 auf. Das Antriebssystem 2 weist zusätzlich einen Controller 8 als Steuergerät auf, welcher zumindest den Stromrichter 6 mittels eines Steuer- und/oder Regelsignals S ansteuert und/oder regelt. Hierbei ist es beispielsweise ebenso denkbar, dass der Controller 8 als ein in den Elektromotor 4 integriertes Motorsteuergerät oder als ein in den Stromrichter 6 integriertes Stromrichtersteuergerät integriert ist.

Der Stromrichter 6 ist als ein Wechselrichter an ein nicht näher gezeigtes Versorgungs- oder Gleichspannungsnetz 10 des Antriebssystems 2 angeschlossen. Hierzu umfasst der Stromrichter 6 zwei netzseitige Anschlüsse 12a, 12b zur Kontaktierung an das Versorgungsnetz 10. Zwischen dem Versorgungsnetz 10 und dem Stromrichter 6 ist ein Gleichstromzwischenkreis 14 gebildet, welcher nachfolgend verkürzt auch als Zwischenkreis bezeichnet wird. Der Zwischenkreis 14 weist funktionsgemäß einen Pluspfad 16, welcher an den der pluspolseitige Anschluss 12a kontaktiert ist, sowie einen Minuspfad 18 auf, welcher entsprechend an den minuspolseitigen Anschluss 12b des Stromrichters 6 kontaktiert ist.

Zwischen dem Pluspfad 16 und dem Minuspfad 18 des Stromrichters 6 liegt im Betrieb der Maschine 2 eine Zwischenkreisspannung U_{ZK} als Versorgungsspannung für den angeschlossenen Elektromotor 4 an. Der Elektromotor 4 ist mittels des Stromrichters 6 zwischen dem Pluspfad 16 und dem Minuspfad 18 an den Zwischenkreis 14 kontaktiert.

Der Stromrichter 6 weist einen integrierten Zwischenkreiskondensator 20 und eine Brückenschaltung 22 mit drei Brückenmodulen 24 auf. Die Zwischenkreisspannung U_{ZK} des Zwischenkreises 14 wird hierbei mittels der Brückenschaltung 22 in eine dreiphasige Versorgungsspannung mit den Phasen u, v, w für den Betrieb des Elektromotors 4 gewandelt. Die Brückenmodule 24 sind hierbei vorzugsweise als gesteuerte IGBT-Module ausgestaltet.

Die Phasen u, v, w sind von der Brückenschaltung 22 an entsprechende Phasen- oder Wicklungsenden einer jeweiligen Phasenwicklung 26 eines nicht näher dargestellten Stators des Elektromotors 4 geführt. Die Phasenwicklungen 26 sind in dem dargestellten Ausführungsbeispiel insbesondere in einer Sternschaltung miteinander verschaltet.

Die Brückenmodule 24 weisen jeweils zwei als IGBT-Transistoren ausgeführte Leistungshalbleiterschalter 28 auf, welche zwischen dem Pluspfad 16 und dem Minuspfad 18 verschaltet sind. Die Leistungshalbleiterschalter 28 sind in der Fig. 1 lediglich beispielhaft mit Bezugszeichen versehen. Zwischen den zwei Leistungshalbschaltern 28 eines Brückenmoduls 24 ist jeweils ein Phasenanschluss für eine jeweilige Phase u, v, w angeordnet.

Die Brückenmodule 24 beziehungsweise deren Leistungshalbleiterschalter 28 werden im Betrieb des Antriebssystems 2 mittels getakteter, impulsförmiger Steuersignale, insbesondere in Form einer Pulsweitenmodulation (PWM), gesteuert. Bei einer solchen Ansteuerung werden die jeweiligen Leistungshalbleiterschalter 28 geschlossen, also elektrisch leitend, oder geöffnet, also elektrisch nicht leitend, geschaltet. Diese Steuersignale werden beispielsweise anhand des Steuer- und/oder Regelsignals S mittels einer nicht näher dargestellten Treiberschaltung des Stromrichters 6 erzeugt.

Durch die Brückenmodule 24 wird ein der jeweiligen Phase u, v, w zugeordneter Phasenstrom als Phasengröße Iᵤ, Iᵥ, I_{w} erzeugt. Die Phasenströme oder Phasengrößen Iᵤ, Iᵥ, I_{w} werden als Betriebszustandsgrößen des Elektromotors 4 mittels einer Messeinrichtung 30 kontinuierlich erfasst oder gemessen. Die Messeinrichtung 30 erzeugt hierbei ein der jeweiligen Phasengröße Iᵤ, Iᵥ, I_{w} entsprechendes Messsignal Mᵤ, Mᵥ, M_{w}. Die Messsignale Mᵤ, Mᵥ, M_{w} werden zur weiteren Auswertung an den Controller 8 übermittelt.

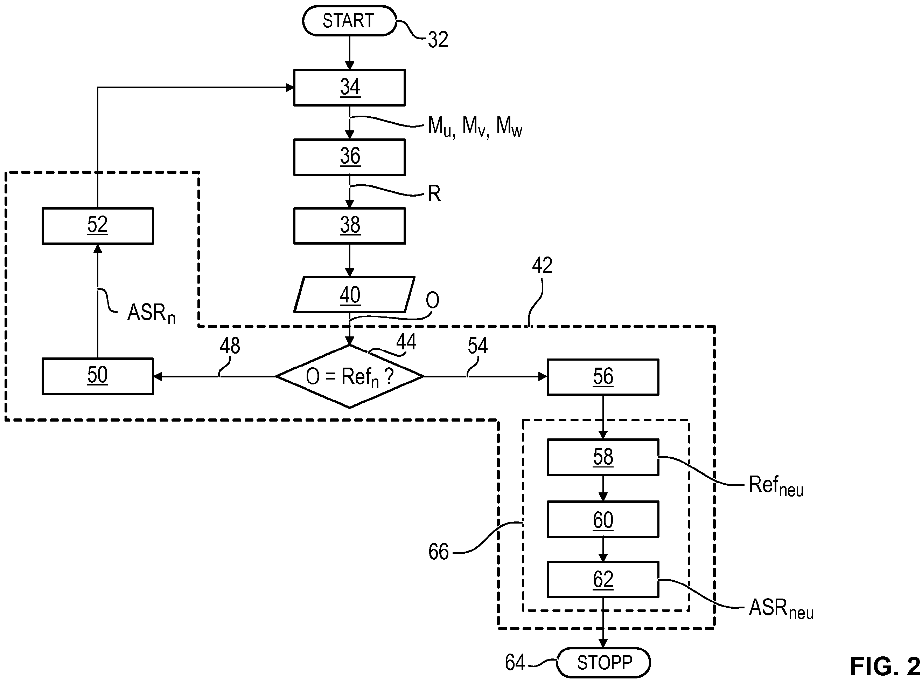

Nachfolgend ist anhand der Figuren 2 bis 10 ein Verfahren zum Betrieb des elektromotorischen Antriebssystems 2 näher erläutert.

In der Fig. 2 ist das Verfahren schematisch anhand einer vereinfachten Flussdiagramm-Darstellung gezeigt.

Nachdem das Antriebssystem 2 in einem ersten Verfahrensschritt 32 gestartet oder in Betrieb genommen wird, werden die Phasen- oder Betriebszustandsgrößen Iᵤ, Iᵥ, I_{w} in einem Verfahrensschritt 34 mittels der Messeinrichtung 30 kontinuierlich erfasst. Der nachfolgend auch als Messschritt bezeichnete Verfahrensschritt 34 erzeugt hierbei kontinuierlich die Messsignale Mᵤ, Mᵥ, M_{w} welche an den Controller 8 gesendet werden.

Der Controller 8 berechnet in einem Verfahrens- oder Rechenschritt 36 anhand der Messsignale Mᵤ, Mᵥ, M_{w} beziehungsweise der Phasengrößen Iᵤ, Iᵥ, I_{w} einen Raumzeiger R. Der Raumzeiger R wird hierbei insbesondere mittels einer 3/2-Transformation aus den Messsignalen Mᵤ, Mᵥ, M_{w} beziehungsweise der Phasengrößen Iᵤ, Iᵥ, I_{w} berechnet.

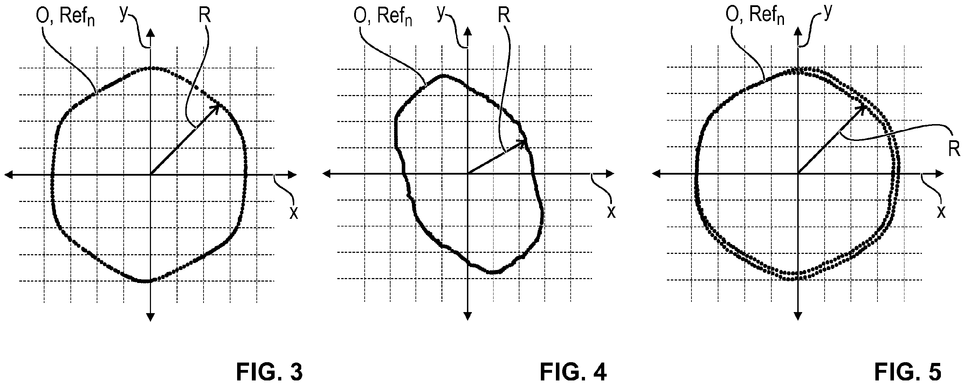

Der berechnete Raumzeiger R ändert seine Orientierung in einer entsprechenden komplexen Ebene oder in einem Koordinatensystem mit einer Änderungsgeschwindigkeit, welche im Wesentlichen einer Winkel- oder Oszillationsgeschwindigkeit der einzelnen Phasengrößen Iᵤ, Iᵥ, I_{w} entspricht. Der Raumzeiger R weist somit einen zeitlichen Verlauf O auf (Fig. 3 bis Fig. 7), welche nachfolgend auch als Ortskurve O bezeichnet ist.

In einem Verfahrensschritt 38 werden die berechneten Raumzeiger-Koordinaten des Raumzeigers R, also dessen Orientierung und Richtung sowie Betrag, kontinuierlich in einem Speicher des Controllers 8 hinterlegt. Die zeitlich nacheinander hinterlegten Raumzeiger R bilden die Ortskurve O.

Die Ortskurve O wird hierbei in einem Verfahrensschritt 40 als ein digitaler oder elektronischer Bilddatensatz erzeugt. Das Bild der Ortskurve O wird in diesem Ausführungsbeispiel insbesondere in einem Pixel- oder Bildpunkteformat von 256×256 Pixel oder Bildpunkte erzeugt und hinterlegt. Hierzu werden die transformierten oder berechneten Werte des Raumzeigers R beziehungsweise dessen Raumzeiger-Koordinaten mittels Rundung in eine normierte, vorzeichenbehaftete n-bit Fixpunkt-Darstellung umgewandelt. Jeder erzeugte Raumzeiger R zeigt somit auf einen Pixel des Bildes, wobei im Zuge der zeitlichen Veränderung und Bewegung des Raumzeigers R die Ortskurve O in dem Bild abgebildet wird. Die Pixel des Bildes sind beispielsweise als binäres Bit oder als Ganzzahlen dargestellt. Die Ortskurve O beziehungsweise deren Bild wird mittels eines Maschinenlernverfahrens 42 ausgewertet. Das Maschinenlernverfahren 42 ist hierzu mit einer Anzahl von Referenzkurven Refₙ trainiert, welche im Wesentlichen Ortskurven vorbekannter Betriebszustände des Antriebssystems 2 und/oder des Elektromotors 4 bzw. des Stromrichters 6 entsprechen. Mit anderen Worten sind die Referenzkurven Refₙ ein Maß für unterschiedliche, vorbekannte Betriebszustände des Antriebssystems 2. Das Maschinenlernverfahren 42 führt hierbei in einem Verfahrensschritt 44 effektiv einen Merkmalsvergleich zwischen dem Bild der Ortskurve O und den gelernten Referenzkurven Refₙ aus. Hierzu werden beispielsweise Bilderkennungs- oder Bildverarbeitungsalgorithmen verwendet.

Das Maschinenlernverfahren 42, insbesondere der Merkmalsvergleich 44, wird von dem Controller 8 insbesondere mittels eines Klassifikators 46 als eine Klassifikation durchgeführt, bei welcher ein geometrisches Muster der Ortskurve O als Merkmal oder Merkmalsvektor bestimmt wird, und untersucht wird, ob dieses Muster oder Merkmal einem vorbekannten geometrischen Muster oder Merkmal(-svektor) einer der vorbekannten Referenzkurven Refₙ entspricht.

Bei der Klassifikation wird das geometrische Muster des zeitlichen Verlaufs des berechneten Raumzeigers R, also insbesondere das Bild beziehungsweise der digitale Bilddatensatz der Ortskurve O, und der zugrunde liegende Betriebszustand des elektromotorischen Antriebssystems 2 bestimmt, indem bei dem Merkmalsvergleich 44 untersucht wird, ob die Ortskurve O vorbekannte Merkmale oder einen vorbekannten Merkmalsvektor aufweist, welcher zu einem vorbekannten Betriebszustand gehört.

Im Normalbetrieb entspricht die aktuelle Ortskurve O einem bekannten Betriebszustand, und somit einer der Referenzkurven Refₙ. Dadurch wird von dem Merkmalsvergleich 44 ein positives Auswerteergebnis 48 bewirkt. Das positive Auswerteergebnis 48 löst einen Verfahrensschritt 50 des Maschinenlernverfahrens 42 aus, bei welchem eine der das positive Auswerteergebnis 48 bewirkenden Referenzkurve Refₙ zugeordnete Ansteuer- und/oder Regelstrategie ARSₙ angewandt wird. Die Referenzkurven Refₙ und die jeweils zugeordneten Ansteuer- und/oder Regelstrategien ARSₙ sind dem Maschinenlernverfahren 42 gemeinsam antrainiert.

Die Ansteuer- und/oder Regelstrategien ARSₙ dienen zur gezielten Ansteuerung und/oder Regelung des Stromrichters 6 zum Zwecke der Erzeugung oder der Bewirkung eines gewünschten Soll-Betriebszustands des Antriebssystems 2. Mit anderen Worten entspricht die jeweilige Ansteuer- und/oder Regelstrategie ARSₙ einer zeitlichen Abfolge von Steuer- und/oder Regelbefehlen für den Stromrichter 6, welche nacheinander oder parallel zueinander ausgeführt werden, um den gewünschten zukünftigen (Soll-)Betriebszustand des Antriebssystems 2 zu bewirken. Dies bedeutet, dass jeder Ansteuer- und/oder Regelstrategie ARSₙ im Wesentlichen ein Steuer- und/oder Regelprogramm oder ein Steuer- und/oder Regelprogrammablauf zum Betrieb des Stromrichters 6 zugeordnet ist. Die Ansteuer- und/oder Regelstrategie ARSₙ wird in einem Verfahrensschritt 52 in entsprechende Steuer- und/oder Regelsignale S umgesetzt. Dies bedeutet, dass der Controller 8 anhand der jeweiligen Ansteuer- und/oder Regelstrategie ARSₙ das Steuer- und/oder Regelsignal S für den Stromrichter 6 erzeugt.

Mit anderen Worten entspricht die Ortskurve O bei einem positiven Auswerteergebnis 48 einem vorbekannten Betriebszustand. Dies bedeutet, dass der aktuelle Ist-Betriebszustand des Antriebssystems 2 in diesem Fall bekannt ist. Diesem Betriebszustand ist weiterhin die Ansteuer- und/oder Regelstrategie ARSₙ als Sollvorgabe für einen zukünftigen (Soll-)Betriebszustand zugeordnet, mittels welchen der Stromrichter 6 optimal und effektiv angesteuert und/oder geregelt wird.

Dies bedeutet, dass im Klassifikator 44 dem vorbekannten Merkmalsvektor, d.h. der vorbekannten Klasse bzw. die vorbekannte Referenzkurve Refₙ, die Ansteuer- und/oder Regelstrategie ARSₙ für den Stromrichter 6 bzw. den Elektromotor 4 zugeordnet ist, welche angewandt wird, wenn die Ortskurve O einen vorbekannten Merkmalsvektor aufweist, d.h. wenn der aktuelle (Ist-)Betriebszustand erkannt wird.

Es wird also der Betriebszustand des elektromotorischen Antriebssystems 2 aus dem zeitlichen Verlauf des berechneten Raumzeigers R ermittelt, und anhand der diesem aktuellen Betriebszustand zugeordneten Ansteuer- und/oder Regelstrategie ARSₙ wird der Stromrichter 6 hinsichtlich eines zukünftigen Betriebszustands eingestellt und/oder geregelt. Dies bedeutet, dass ein bestimmter Soll-Betriebszustand eingestellt und/oder geregelt wird, welcher dem aktuellen Ist-Betriebszustand zugeordnet ist, um in derjenigen Betriebssituation, welche Anlass des Ist-Betriebszustands ist, einen optimalen Betrieb des elektromotorischen Antriebssystems 2 zu gewährleisten.

Im Falle eines negativen Auswerteergebnisses 54 des Merkmalsvergleichs 44, bei welchem die aktuelle Ortskurve O kein Merkmal der antrainierten Referenzkurven Refₙ aufweist, wird das Antriebssystem 2 in einem Verfahrensschritt 56 sicher abgeschaltet. Ein negatives Auswerteergebnis 54 entspricht im Wesentlichen einem unbekannten Betriebszustand des elektromotorischen Antriebssystems 2 und somit mit hoher Wahrscheinlichkeit einem Fehler oder einer Beeinträchtigung der gewünschten Motorfunktion, so dass das Antriebssystem 2, oder zumindest der Elektromotor 4, im Verfahrensschritt 56 zuverlässig und zeitnah abgeschaltet wird. In dem Verfahrensschritt 56 wird insbesondere eine Sicherheitsfunktion, beispielsweise ein als Safe-Torque-Off (STO) bezeichneten sicheren Halt des Elektromotors 4, bewirkt. Mit anderen Worten entspricht der Verfahrensschritt 56 im Wesentlichen der Ansteuer- und/oder Regelstrategie bei einem unbekannten Betriebszustand des Antriebssystems 2.

Nach dem Verfahrensschritt 56 wird ein Verfahrensschritt 58 ausgeführt, bei welchem die Merkmale der aktuellen Ortskurve O extrahiert und als eine neue Referenzkurve Refₙₑᵤ dem Maschinenlernverfahren 42 antrainiert wird. Anschließend wird in einem Verfahrensschritt 60 dieser Referenzkurve Refₙₑᵤ der aktuelle Betriebszustand des Antriebssystems 2 zugeordnet, welcher das negative Auswerteergebnis 54 bewirkt hat. Abschließend wird der Referenzkurve Refₙₑᵤ in einem Verfahrensschritt 62 eine gewünschte Ansteuer- und/oder Regelstrategie ARSₙₑᵤ zugeordnet, und das Verfahren bzw. der Betrieb des Antriebssystems 2 wird in einem Verfahrensschritt 64 beendet oder gestoppt.

Die Referenzkurve Refₙₑᵤ und die zugeordnete Ansteuer- und/oder Regelstrategie ARSₙₑᵤ werden hierbei insbesondere in einer überwachten Lernphase (Lernverfahren) 66 des Maschinenlernverfahrens 42 erzeugt, indem die neue Referenzkurve Refₙₑᵤ im Verfahrensschritt 60 einem bestimmten Betriebszustand des Antriebssystems 2 zugeordnet wird. Mit anderen Worten wird insbesondere die neue Ansteuer- und/oder Regelstrategie ARSₙₑᵤ in einem Maschinenlernverfahren mit Unterweisung erzeugt.

Die Lernphase 66 wird insbesondere von einer Lernmaschine 68 des Controllers 8 ausgeführt. Die Lernmaschine 68 wird in der durch die Verfahrensschritte 58, 60 und 62 charakterisierten Lernphase 66 trainiert.

Der im Auswerteergebnis 54 bestimmten Ortskurve O mit einer noch unbekannten Referenzkurve Refₙₑᵤ wird ein bestimmter Betriebszustand des Antriebssystems 2 zugeordnet. Der an sich bekannte zukünftige (Soll-)Betriebszustand für den an sich bekannten (Ist-)Betriebszustand soll nun durch Erkennung der Ortskurve O bzw. der neuen Referenzkurve Refₙₑᵤ in zukünftigen Merkmalsvergleichen 44 einstellbar gemacht werden. Im Rahmen des Maschinenlernverfahrens 42 wird nunmehr insbesondere in der auch als Trainingsverfahren bezeichneten Lernphase 66 der bestimmte Betriebszustand der neuen Referenzkurve Refₙₑᵤ als der aktuelle Betriebszustand hergestellt und anschließend dadurch eine entsprechende Ansteuerung und/oder Regelung des Stromrichters 6 bzw. des Elektromotos 4 der gewünschte Soll-Betriebszustand hervorgerufen, welche dann durch die Ansteuer- und/oder Regelstrategie ARSₙₑᵤ im Verfahrensschritt 62 charakterisiert und mit der neuen Referenzkurve Refₙₑᵤ verknüpft wird. Die neue Referenzkurve Refₙₑᵤ ist dann eine gelernte Referenzkurve Refₙ und steht fortan als vorbekannter Betriebszustand mit einer zugeordneten Ansteuer- und/oder Regelstrategie ARSₙ zur Verfügung.

Durch die Verfahrensschritte 58, 60 und 62 der Lernphase 66 ist es möglich, neue vorher unbekannte Betriebszustände zu charakterisieren und dem Maschinenlernverfahren 42 für den zukünftigen Betrieb hinzuzufügen, sodass anhand der neuen Ansteuer- und/oder Regelstrategie ARSₙ bei einem zukünftigen Auftreten einer der neuen Referenzkurve Refₙₑᵤ entsprechenden Ortskurve O ein positives Auswerteergebnis 48 bewirkt wird, und der Stromrichter 6 bzw. der Elektromotor 4 anhand der dadurch bewirkten Ansteuer- und/oder Regelsignale S möglichst optimal angesteuert und/oder geregelt wird.

Mit anderen Worten wird die aktuelle Ortskurve O in den Verfahrensschritten 58, 60 und 62 im Wesentlichen einer Merkmalsextraktion unterzogen, bei welcher ein neuer und insbesondere individueller, d.h. betriebszustandsspezifischer Merkmalsvektor erzeugt wird, welcher als ein zusätzlicher vorbekannter Merkmalsvektor beziehungsweise als Referenzkurve Refₙₑᵤ gespeichert wird. Aus der Ortskurve O wird demnach ein neuer Merkmalsvektor extrahiert und dann gespeichert, um zukünftig auf diesen als vorbekannten Merkmalsvektor beziehungsweise Referenzkurve Refₙₑᵤ zurückzugreifen. Der neue Merkmalsvektor ist dann ein gelernter Merkmalsvektor. Insgesamt definiert und lernt das Antriebssystem 2 also eine neue Klasse, welche fortan dem Klassifikator 44 zur Klassifikation zur Verfügung steht.

In den Figuren 3 bis 7 sind beispielhaft unterschiedliche Ortskurven O beziehungsweise Referenzkurven Refₙ für verschiedene Betriebszustände des elektromotorischen Antriebssystems 2 gezeigt.

Die Fig. 3 bis Fig. 7 zeigen hierbei jeweils ein Koordinatensystem des berechneten Raumzeigers R, mit einer horizontalen Abszissenachse x und einer hierzu senkrechten, vertikalen Ordinatenachse y, in welchen die Koordinaten des rotierenden Raumzeigers R als fortlaufende Ortskurven O bzw. Referenzkurven Refₙ gezeigt sind. Beispielhaft sind in den Figuren 3 bis 5 jeweils ein Raumzeiger R dargestellt. Die Ortskurven O oder Referenzkurven Refₙ entsprechen hierbei im Wesentlichen dem zeitlichen Verlauf der Spitze des Raumzeigers R im Zuge einer oder mehrerer Umdrehungen bei einem bestimmten Betriebszustand.

Die Raumzeiger R der Figuren 3 bis 7 sind hierbei insbesondere anhand des Phasenstroms Iᵤ, Iᵥ, I_{w} als Phasen- oder Betriebszustandsgröße bestimmt, wobei der Elektromotor 4 insbesondere als ein Asynchronmotor ausgeführt ist.

Die Figur 3 zeigt eine Ortskurve O oder eine Referenzkurve Refₙ, welche einem Normalbetrieb des elektromotorischen Antriebssystems 2 entspricht. Die Ortskurve O bzw. die Referenzkurve Refₙ weist hierbei eine im Wesentlichen kreisrunde Form oder ein kreisrundes (geometrisches) Muster auf. Abweichungen von dieser Kreisform als geometrisches Muster weisen somit auf vom Normalbetrieb abweichende (unterschiedliche) Betriebszustände des Antriebssystems 2 hin.

In der Fig. 4 ist eine Ortskurve O bzw. eine Referenzkurve Refₙ für den Fall eines Windungsschluss des Elektromotors 4 gezeigt. Hierbei sind eine oder mehrere Windungen einer der Phasenwicklungen 26 einer der Phasen u, v, w kurzgeschlossen. Dadurch wird eine Verformung der geometrischen Form beziehungsweise des Musters der Ortskurve O zu einer elliptischen Form bewirkt. Die Hauptachse der resultierenden elliptischen Form beziehungsweise des resultierenden elliptischen Musters ist in dem Koordinatensystem entlang der fehlerhaften Phasenrichtung orientiert. Die Elliptizität der Ortskurve O ist hierbei ein Maß für den Schweregrad des Fehlers, also im Wesentlichen für die Anzahl der kurzgeschlossenen Windungen.

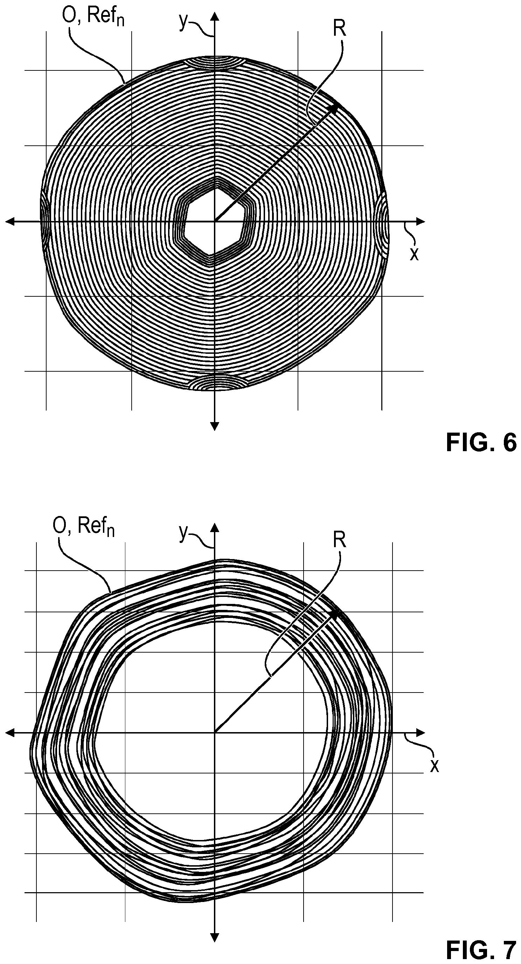

Die Fig. 5 zeigt eine Ortskurve O bzw. eine Referenzkurve Refₙ für den Fall einer Luftspaltexzentrizität des Rotors bezüglich des Stators des Elektromotors 4. Mit anderen Worten ist die Drehachse des Rotors in diesem Falle dezentral zur Mittel- oder Axialachse des Stators ausgerichtet. Wie in der Fig. 5 vergleichsweise deutlich ersichtlich ist, bewirkt eine solche Luftspaltexzentrizität einen Versatz oder eine Aufteilung aufeinanderfolgender Raumzeigerumdrehungen, sodass die Ortskurve O ein aufgespaltenes geometrisches Muster aufweist. Die Aufspaltung beziehungsweise der relative radiale Abstand aufeinanderfolgender Umdrehungen des Raumzeigers R ist hierbei ein Maß für den Grad der Luftspaltexzentrizität. Die Fig. 6 und Fig. 7 zeigen eine Ortskurve O oder Referenzkurve Refₙ für einen netzbetriebenen Asynchronmotor 4 mit einem transienten Verlauf, also im Wesentlichen für mehrere aufeinanderfolgende Umdrehungen des Raumzeigers. Die Fig. 6 und Fig. 7 zeigen hierbei eine Ortskurve O bzw. Referenzkurve Refₙ für einen Start des Elektromotors 4, also für eine Anlaufphase aus einer Ruheposition. In der Fig. 6 ist ein fehlerfreier Start gezeigt, wobei in der Fig. 7 ein Verlauf für einen fehlerhaften Elektromotor 4 im Falle eines Käfigbruchs gezeigt ist.

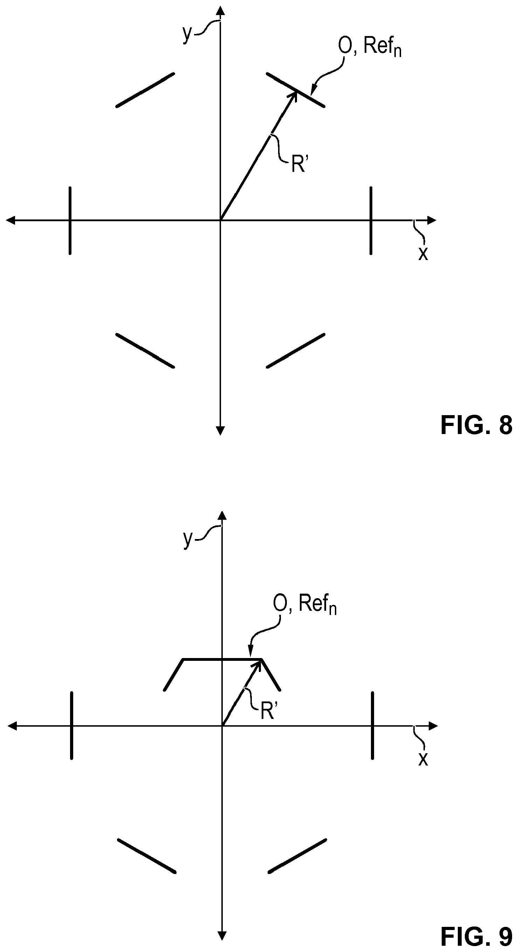

Die Fig. 8 und die Fig. 9 zeigen Raumzeigerdiagramme für einen Spannungs-Raumzeiger, also einen Raumzeiger R', welcher aus den Phasenspannungen der (Motor-)Phasen u, v, w als Phasen- oder Betriebszustandsgröße bestimmt wurde. Der Elektromotor 4 ist hierbei insbesondere ein bürstenloser Gleichstrommotor.

Jedes Brückenmodul 24 weist zwei Leistungshalbleiterschalter 28 auf, und kann somit zwei unterschiedliche Schalterzustände annehmen. Die Brückenschaltung 22 weist drei solcher Brückenmodule 24 auf, so dass sich dadurch 2³ = 8 Schaltzustände ergeben. Für jede Schalterstellung der Leistungshalbleiterschalter 28 ergibt sich eine andere Spannungskonstellation zwischen den Phasen u, v, w und somit auch ein anderer (Spannungs-)Raumzeiger R'. Für die zwei Schalterstellungen, bei welchen entweder alle drei pluspfadseitigen oder alle drei minuspfadseitigen Leistungshalbleiterschalter 28 geschlossen sind, werden alle drei Phasen u, v, w kurzgeschlossen. Dadurch ist zwischen den Phasen u, v, w keine Spannung messbar. Die beiden korrespondierenden Spannungsvektoren werden daher auch als Nullspannungsraumzeiger bezeichnet, welche im Ursprung des Koordinatensystems x-y liegen. Somit weist die Ortskurve O bzw. die Referenzkurve Refₙ in der Fig. 8 sechs aktive und zwei passive Spannungsraumzeigerpositionen auf.

Die Fig. 9 zeigt eine Ortskurve O bzw. eine Referenzkurve Refₙ für einen fehlerhaften Betrieb des Elektromotors 4 bzw. des Stromrichters 6, bei welchen einer der Leistungshalbleiterschalter 28 nicht eingeschaltet werden kann.

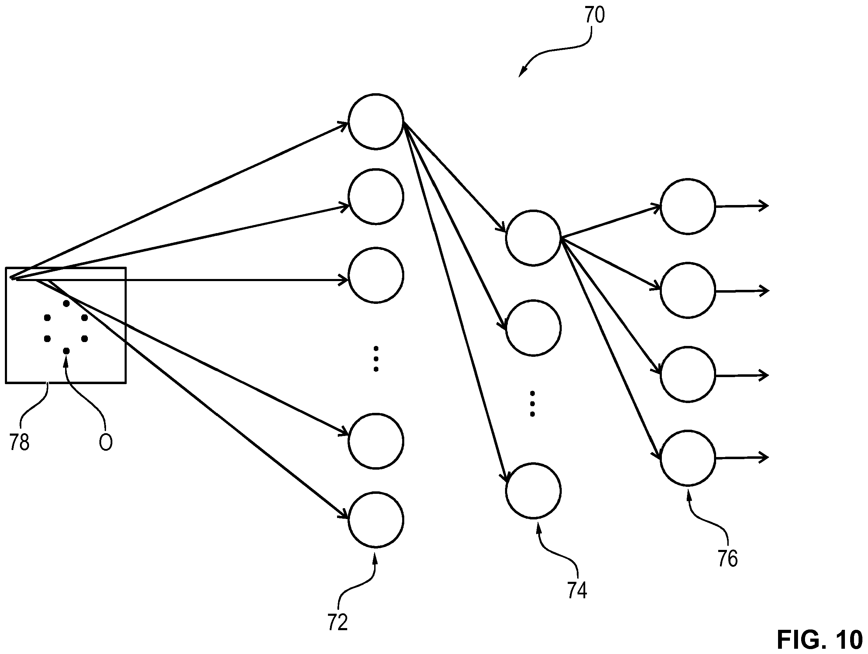

In der Fig. 10 ist in schematischer und vereinfachter Darstellung ein (künstliches) neuronales Netz 70 für das Maschinenlernverfahren 42 gezeigt.

Die vorbekannte Referenzkurven Refₙ sind in dem neuronalen Netz 70 integriert, mittels welchem untersucht wird, ob die Ortskurve O vorbekannte Merkmale aufweist, indem die Ortskurve O des Raumzeigers R, R' bestimmt und als ein Eingangssignal das neuronale Netz 70 verwendet wird. Das neuronale Netz 70 weist eine Eingangsschicht (input layer) 72 und mindestens eine Schicht (hidden layer) 74 sowie eine Ausgangsschicht (output layer) 76 auf.

Das Netz 70 beziehungsweise die Schichten 72, 74 und 76 weisen eine Anzahl von einzelnen, nicht näher bezeichneten, Neuronen auf, welche miteinander verbunden sind. Zur vereinfachten Darstellung sind in der Fig. 10 beispielhaft lediglich zwölf Verbindungen gezeigt. Jede Verbindung weist hierbei eine (Ge-)Wichtung auf, welche den Einfluss eines jeweiligen Sendeneurons auf das jeweilige Zielneuron bestimmt. Die einzelnen Neuronen sind beispielsweise als mathematische Funktionen definiert.

Im dem in der Fig. 10 gezeigten Ausführungsbeispiel wird hierzu aus einem im Verfahrensschritt 40 erzeugten Bild oder Bilddatensatz 78 des (Spannungs-)Raumzeigers R', also der Ortskurve O, die Eingangsschicht 72 mit einer nicht näher bezeichneten Anzahl von (Eingangs-)Neuronen bestimmt. Beispielsweise entspricht hierbei jeder Pixel in dem Bild 78 einem Eingangsneuron der Eingangsschicht 72.

Die mindestens eine verdeckte Schicht 74 extrahiert und erkennt hierbei charakteristische Merkmale des Bildes 78. Hierzu sind die Referenzkurven Refₙ dem neuronalen Netz 70 antrainiert und insbesondere in die Topologie der Schicht 74 integriert; dies bedeutet dass die Merkmale der Referenzkurven Refₙ in den mathematischen Funktionen der Neuronen und/oder in den Wichtungen der Verbindungen integriert sind. Die Anzahl von Neuronen in der Schicht 74 klassifiziert somit das Bild 78 beziehungsweise die Ortskurve O anhand der Referenzkurven Refₙ und ordnet sie einem vorbekannten Betriebszustand zu. Mit anderen Worten erfolgt der Merkmalsvergleich 44 in der Schicht 74 des neuronalen Netzes 70. Die Ausgangsschicht 76 weist eine Anzahl von (Ausgangs-)Neuronen auf, wobei jedes Ausgangsneuron oder Ausgangswert im Wesentlichen eine Wahrscheinlichkeit eines bestimmten (vorbekannten) Betriebszustands entspricht. Beispielsweise entsprechen die vier dargestellten Ausgangsneuronen der Ausgangsschicht 76 einem fehlerfreien Betriebszustand, einem Betriebszustand mit Wicklungsschluss, einem Betriebszustand mit Exzentrizitätsfehler, und einem Wicklungsschluss mit einem Kommutierungsfehler. In den Ausgangsneuronen der Ausgangsschicht 76 ist hierbei weiterhin die jeweilige Ansteuer- und/oder Regelstrategie ARSₙ des jeweils zugeordneten Betriebszustands integriert.

Die Erfindung ist nicht auf das vorstehend beschriebene Ausführungsbeispiel beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit dem Ausführungsbeispiel beschriebenen Einzelmerkmale auch auf eine andere Weise miteinander kombinierbar, ohne den Gegenstand der Erfindung zu verlassen.

Wesentlich ist, dass anhand der aktuellen Ortskurve O durch Auswertung mit einem Maschinenlernverfahren 42 anhand einer Anzahl von gelernten Referenzkurven Refₙ ein Betriebszustand des Antriebssystems 2 bestimmt wird. Anhand eines Auswerteergebnisses 48, 54 wird der Stromrichter 6 und/oder der Elektromotor 4 des Antriebssystems 2 vorausschauend angesteuert und/oder geregelt.

Anstelle des Phasenstroms oder der Phasenspannung sind hierbei auch andere Phasengrößen, wie beispielsweise der magnetische Fluss, zur Berechnung des Raumzeigers R, R' erfassbar. Ebenso denkbar ist es, dass als Betriebszustandsgröße ein Steuer- und/oder Regelwert bzw. Regelsignal verwendet wird. Beispielsweise ist es denkbar, dass im Zuge einer Zweipunktregelung, bei welcher zum Beispiel ein Stromistwert auf einen Stromsollwert geregelt wird, die Differenz zwischen dem Stromistwert und dem Stromsollwert in einer Motorphase u, v, w als Phasen- oder Betriebszustandsgröße verwendet wird. Wesentlich ist, dass die erfassten Betriebszustands- oder Phasengrößen eine Nullbedingung erfüllen, sich also in Summe zu allen Zeitpunkten stets zu Null addieren, sodass der Raumzeiger R, R' zuverlässig bestimmbar ist.

### Bezugszeichenliste

- 2: Antriebssystem
- 4: Elektromotor
- 6: Stromrichter
- 8: Controller
- 10: Versorgungsnetz
- 12a, 12b: Anschluss
- 14: Gleichstromzwischenkreis/Zwischenkreis
- 16: Pluspfad
- 18: Minuspfad
- 20: Zwischenkreiskondensator
- 22: Brückenschaltung
- 24: Brückenmodul
- 26: Phasenwicklung
- 28: Leistungshalbleiterschalter
- 30: Messeinrichtung
- 32: Verfahrensschritt
- 34: Verfahrensschritt/Messschritt
- 36: Verfahrensschritt/Rechenschritt
- 38,40: Verfahrensschritt
- 42: Maschinenlernverfahren
- 44: Verfahrensschritt/Merkmalsvergleich
- 46: Klassifikator
- 48: Auswerteergebnis
- 50, 52: Verfahrensschritt
- 54: Auswerteergebnis
- 56, 58, 60: Verfahrensschritt
- 62, 64: Verfahrensschritt
- 66: Lernphase/Trainingsverfahren
- 68: Lernmaschine
- 70: Netz
- 72: Eingangsschicht
- 74: Schicht
- 76: Ausgangsschicht
- 78: Bild/Bilddatensatz
- S: Steuer-/Regelsignal
- U_{ZK}: Zwischenkreisspannung
- u, v, w: Phase
- Iᵤ, Iᵥ, I_{w}: Phasenstrom/Phasengröße/Betriebszustandsgröße
- Mᵤ, Mᵥ, M_{w}: Messsignal
- R, R': Raumzeiger
- O: Verlauf/Ortskurve
- Refₙ, Refₙₑᵤ: Referenzkurve
- ARSₙ, ARSₙₑᵤ: Ansteuer-/Regelstrategie
- x, y: Achse

## Patentansprüche

1. Verfahren zum Betrieb eines elektromotorischen Antriebssystems (2) aufweisend mindestens einen Elektromotor (4),
- wobei eine Betriebszustandsgröße (Iᵤ, Iᵥ, I_{w}) des Elektromotors (4) erfasst wird,
- wobei anhand der Betriebszustandsgröße (Iᵤ, Iᵥ, I_{w}) ein Raumzeiger (R, R') bestimmt wird,
- wobei aus dem zeitlichen Verlauf des Raumzeigers (R, R') eine Ortskurve (O) als ein digitaler Bilddatensatz (78) erzeugt wird,
- wobei ein Maschinenlernverfahren (42) vorgesehen ist, welchem in einer Lernphase eine Anzahl von Ortskurven für unterschiedliche, vorbekannte Betriebszustände des Elektromotors (4) als Referenzkurven (Refₙ) antrainiert werden,
- wobei die Ortskurve (O) zur Bestimmung eines aktuellen Ist-Betriebszustands des Elektromotors (4) mittels des Maschinenlernverfahrens (42) mit der Anzahl von Referenzkurven (Refₙ) in einem Merkmalsvergleich (44) ausgewertet wird, und
- wobei der Elektromotor (4) anhand des Merkmalvergleichs (44) angesteuert und/oder geregelt wird.

2. Verfahren nach Anspruch 1,
**dadurch gekennzeichnet,**
**dass** in der Lernphase des Maschinenlernverfahrens (42) jeder Referenzkurve (Refₙ) eine Ansteuerungs- und/oder Regelstrategie (ARSₙ) zur Bewirkung eines Soll-Betriebszustands des Elektromotors (4) zugeordnet wird.

3. Verfahren nach Anspruch 2,
**dadurch gekennzeichnet,**
**dass** der Elektromotor (4) bei einem positiven Auswerteergebnis (48) des Merkmalvergleichs (44), bei welchem das Maschinenlernverfahren (42) die Ortskurve (O) als einen vorbekannten Betriebszustand des Elektromotors (4) erkennt, vorausschauend auf den zugeordneten Soll-Betriebszustand gesteuert und/oder geregelt wird.

4. Verfahren nach Anspruch 2 oder 3,
**dadurch gekennzeichnet,**
**dass** der Elektromotor (4) bei einem negativen Auswerteergebnis (54) des Merkmalvergleichs (44), bei welchem das Maschinenlernverfahren (42) die Ortskurve (O) nicht als einen vorbekannten Betriebszustand des Elektromotors (4) erkennt, sicher abgeschaltet wird.

5. Verfahren nach einem der Ansprüche 2 bis 4,
**dadurch gekennzeichnet,**
- **dass** dem Maschinenlernverfahren (42) bei einem negativen Auswerteergebnis (54) die aktuelle Ortskurve (O) als neue Referenzkurve (Refₙₑᵤ) antrainiert wird, und
- **dass** der neuen Referenzkurve (Refₙₑᵤ) ein neuer Soll-Betriebszustand zugeordnet wird.

6. Verfahren nach Anspruch 5,
**dadurch gekennzeichnet,**
**dass** der neue Soll-Betriebszustand in einem überwachten Maschinenlernverfahren (66) erzeugt wird, indem die neue Referenzkurve (Refₙₑᵤ) einem bestimmten Betriebszustand des Elektromotors (4) zugeordnet wird.

7. Verfahren nach einem der Ansprüche 1 bis 6,
**dadurch gekennzeichnet,**
**dass** der Merkmalsvergleich (44) mittels eines Klassifikators (46) als Klassifikation durchgeführt wird, bei welcher ein geometrisches Muster der Orstkurve (O) bestimmt wird, und untersucht wird, ob dieses Muster einem vorbekannten geometrischen Muster einer der Referenzkurven (Refₙ) entspricht.

8. Verfahren nach einem der Ansprüche 1 bis 7,
**dadurch gekennzeichnet,**
**dass** die Betriebszustandsgröße (Iᵤ, Iᵥ, I_{w}) fortlaufend oder kontinuierlich erfasst wird.

9. Verfahren nach einem der Ansprüche 1 bis 8,
**dadurch gekennzeichnet,**
**dass** als Betriebszustandsgröße (Iᵤ, Iᵥ, I_{w}) eine Phasengröße des Elektromotors (4) erfasst wird.

10. Elektromotorisches Antriebssystem (2) aufweisend mindestens einen Elektromotor (4) und einen damit gekoppelten Controller (8) zur Durchführung des Verfahrens nach einem der Ansprüche 1 bis 9.
